# EUROPEAN PATENT SPECIFICATION

(11) **EP 1 018 231 B1**
(45) Date of publication and mention of the grant of the patent: **24.05.2006**
(21) Application number: 98944098.7
(22) Date of filing: 24.09.1998
(51) Int. Cl.: H04L 9/08, H04L 29/06, H04L 12/58, H04K 1/00

(54) **A DATA ENCRYPTION SYSTEM FOR INTERNET COMMUNICATION**
DATENVERSCHLÜSSELUNGSSYSTEM FÜR INTERNET-KOMMUNIKATION
SYSTEME DE CHIFFREMENT DE DONNEES POUR TRANSMISSION PAR L'INTERNET

(30) Priority: 25.09.1997 GB 9720478; 24.09.1998 GB 9820824
(43) Date of publication of application: 12.07.2000
(73) Proprietor: Halpern, John Wolfgang, Bucharest sector 4 (RO)
(72) Inventor: Halpern, John Wolfgang, Bucharest sector 4 (RO)
(86) International application number: PCT/GB1998/002881
(87) International publication number: WO 1999/016199

(56) References cited:
- EP-A- 0 738 058
- US-A- 5 412 723
- KAZUE TANAKA ET AL: "KEY DISTRIBUTION SYSTEM FOR MAIL SYSTEMS USING ID-RELATED INFORMATION DIRECTORY" COMPUTERS & SECURITY INTERNATIONAL JOURNAL DEVOTED TO THE STUDY OF TECHNICAL AND FINANCIAL ASPECTS OF COMPUTER SECURITY, vol. 10, no. 1, 1 February 1991 (1991-02-01), pages 25-33, XP000209185 ISSN: 0167-4048

## Description

There is a general concensus that serious use of the internet potential for the needs of Commerce and Industry requires a 100% long-term effective system for protecting privacy of the interchanges.

Several aspects apart from privacy would be important in making a choice of the technique. It would have to be suitable for all digital transmissions, irrespective of the coding employed. The same encryption system should be workkable for lettered, audible or visual messages. Also, the time of processing the data should preferably not add more than 80% to the time for transmitting the same data in the clear form. Furthermore, no time should be spent on looking up directories for keys or other procedure rules.

EP-A-0738 058 discloses a system for the secure distribution of encryption keys using a key management device attached to each user's encryption machine, containing a list of secure communication partners and their respective encryption keys. If the desired addressee data is not found in the local data list, the device connects to a secure key distribution centre which is protected by encryption using the public key method.

Kazue Tanake et al: "Key Distribution System for Mail Systems using ID-Related Information Directory", Computers and Security International Journal Devoted to the Study of Technical and Financial Aspects of Computer Security, vol. 10, no. 1 (1991-02-01), pp 25 - 33, ISSD 0167-4048, discloses a key distribution system which uses a public directory, which contains each user's ID-related information. A sender generates a key and key information which depends on the receiver, and sends the key information along with the encrypted message.

The objectives of this patent application follow from what has just been said:
o to create for owners of PC's certain supplementary components easily added with the result of replacing registered and high-priority mail transmissions by a less expensive and faster track protected against breach of confidentiality.
o to reduce the need for personal trustworthiness and to replace it by trust-worthiness of the provisions of the system.
o While the idea of "trusted third parties" is appropriate where Government interests are directly involved, the many contingencies that arise when applied to all communications would strain an already overburdened legal system. In contradistinction, the here proposed method would save trustworthy server stations from slipping into arbitrariness, favoritism and self-serving bureaucracy. At the same time it would open a clear route for observers at Govenment level to use their authority of sampling messages in the interest of crime prevention and to do so even for longer periods if and when properly authorized and reasoned for in exposes open for public inspection within six years.

This paper will outline the technical platform for accomplishing the above sketched objectives, with the further provision that its service be available to everyone at a relatively low extra cost over and above the cost of using internet convocation.

The said 'technical platform' constitutes a system resting on two main pillars, namely
(a) an algorithm which generates variable wordlength data scrambling
(b) a hierarchic system of key distribution (e.g. a regulated method for ageing and then eliminating keys)

In accordance with a first aspect, the present invention as claimed in Claim 1 provides an encryption and fully automatic key renewal system for confidential e-mail communication, comprising at least two e-mail stations linked to a communication system; the encryption and automatic key renewal system comprising:
a key generation centre (NKGC) for the generation of random keys for the use of said at least two e-mail stations;
means for the periodic renewal of the keys used by said at least two e-mail stations; and
means for scrambling or encrypting data to be transmitted, using said keys; and
local server stations which store and update said random keys generated in said key generation centre; characterised in that
said local server stations store said keys in a look-up table, each key being associated with an address code and each address code having associated data indicative of the age of said key at any time and to classify the age relative to the age of other keys in use at any given time; and
each said server station including means adapted to issue, prior to each confidential e-mail communication from said at least two e-mail stations, a new key to the sending e-mail station, as the key to be used by said station for scrambling or encrypting the data to be transmitted;
wherein said look-up table means stores a fixed number of encryption key numbers conjointly with their respective access addresses in a shift register-like memory structure wherein the said fixed group of key numbers and said addresses can be moved at quasi randomly arranged times from a younger to an older position the youngest position serving as an entrance point for a new number supplied by the said key generation centre, and the oldest number being relegated to an inactive and reserved position outside the said fixed number or group of encryption keys.

In accordance with another embodiment, there is provided an encryption and automatic encryption key renewal system for confidential e-mail communication, comprising at least one e-mail station linked to a communication system; said system comprising a pseudo-random data generator, characterised by a key generation system and an encryption circuit, said key generation system automatically providing said e-mail station with a new encryption key before each e-mail communication, and wherein the output of said pseudo-random data generator is mixed with the bit levels of outputs of said encryption circuit and with clear bit levels of said input data, according to said key, so as to diffuse any pattern such as may be recognised in the expanded data words.

The said technical platform' constitutes a system resting on two main pillars, namely
(a) an algorithm which generates variable wordlength data scrambling
(b) a hierarchic system of key distribution (e.g. a regulated method for ageing and then eliminating keys)

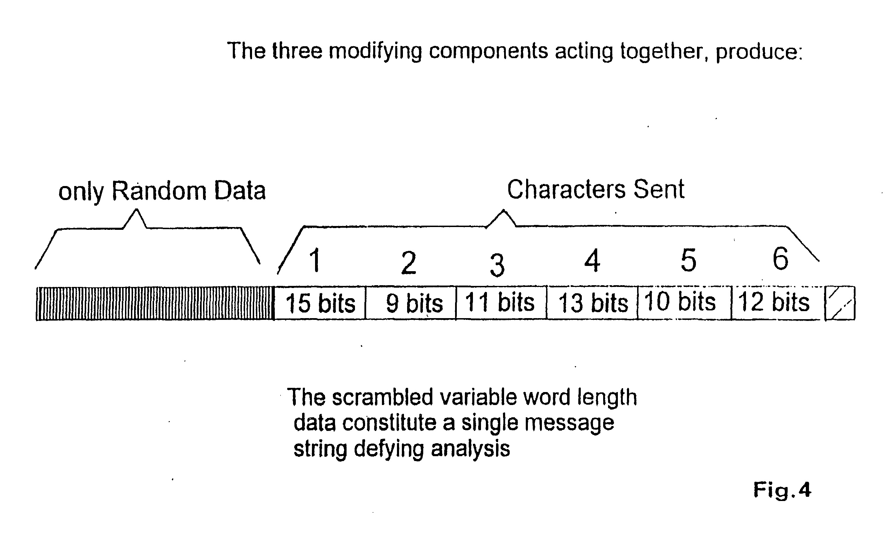

In place of a lengthy explanation, we begin by referring to Figure 4 which illustrates the idea of variable word length text transformation. It will be clear that computerised scanning of the encrypted text will in this case have no prospect of providing any clue.

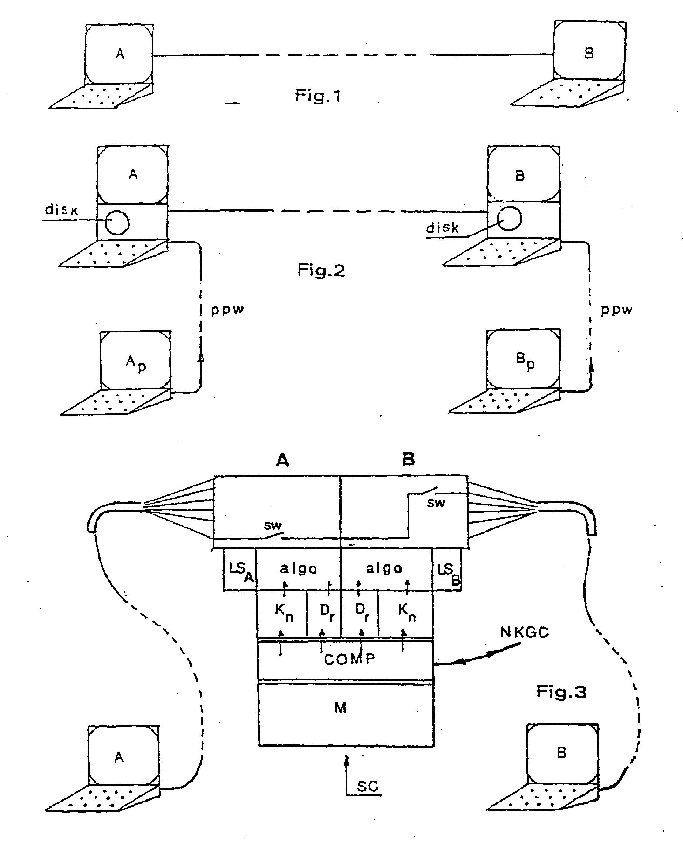

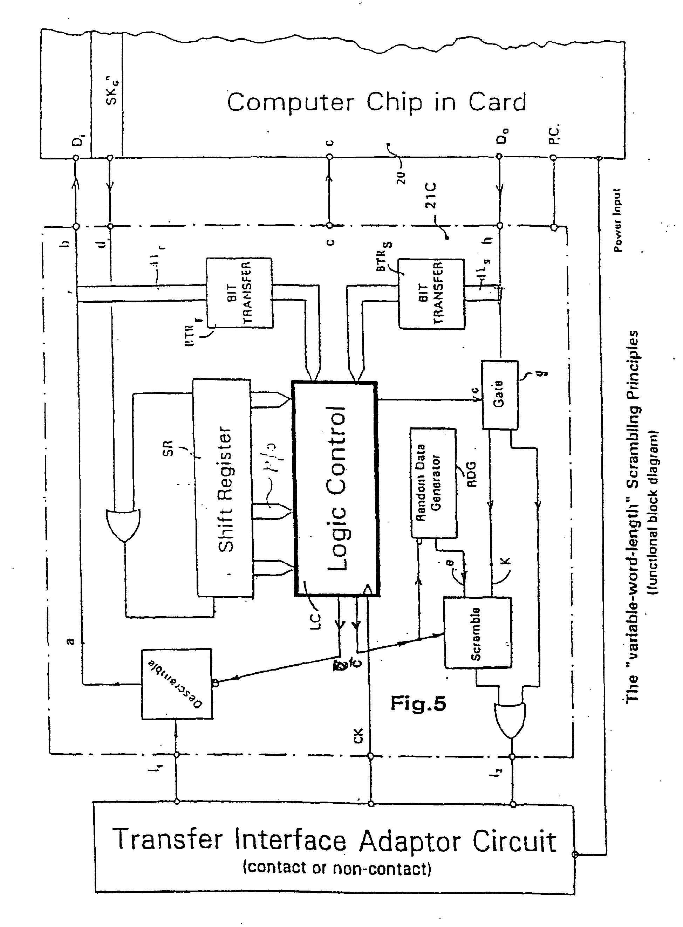

Figure 5 shows a functional block diagram of the encryption/decryption hardware. In early implementations, a 16 bit shift register was used (block SR) with simple output to input connection. The encrypted output resulting from such an arrangement showed a certain periodicity if the clear text consisted of the binary representation of a single letter, for example the letter 'a' in unchanging repetition. This revealed the potential for a certain weakness of the method unless steps are taken to overcome this possible point of attack for a hacker. In present designs we use a 31 bit shift register as the basis for a pseudo random data generator wherein the periodicity is vastly (pattern recurrance only once every 2,14 billion different combinations) reduced. In addition, further measures are taken to begin each message with an undefined length of meaningless text. That text is not delivered in clear by the algorithm. For the user it constitutes simply a few seconds waiting time added to the setting up time. One method of achieving this will be explained in conjunction with Figures 3,4 and 8.

Returning to the description of Fig. 5, paralell outputs from the shift register are connected to various logic elements under the heading LOGIC CONTROL. This comprises for example, a programmable counter, several flip flops and bistables and various gates. Some of the logic control elements are also exposed to inputs of the logic levels of the real data, both outgoing or incoming. These data are applied with a delay of one full clock pulse duration. This is done in the squares named 'bit delay'. The encrypted text on line l₂ is derived from an OR gate into which alternately pass bit elements from the real data and from the Random data generator RDG. respectively, a by real data modified,output from said generator. Encrypted data received are descrambled by action of the Logic Control group, in a single AND gate.

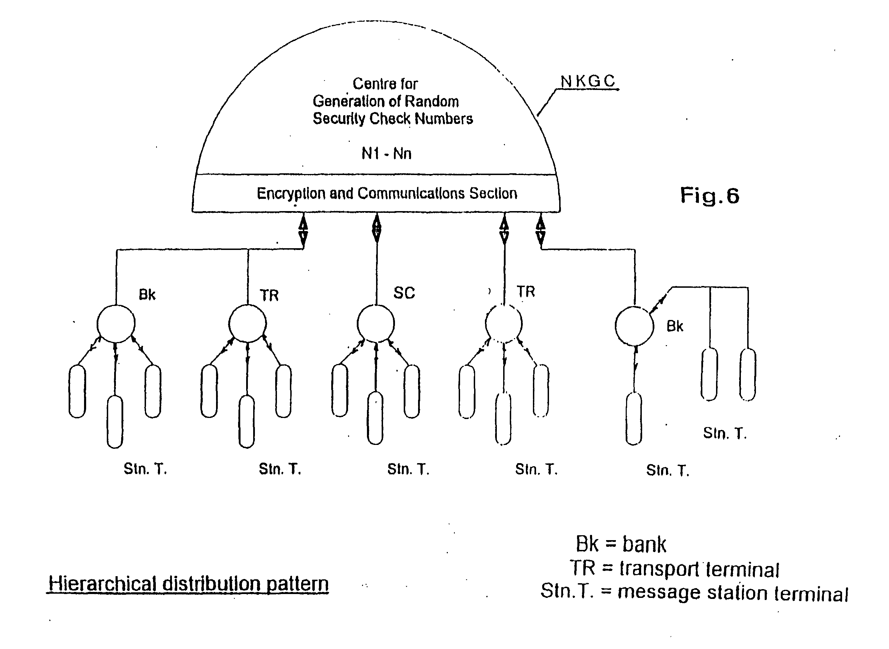

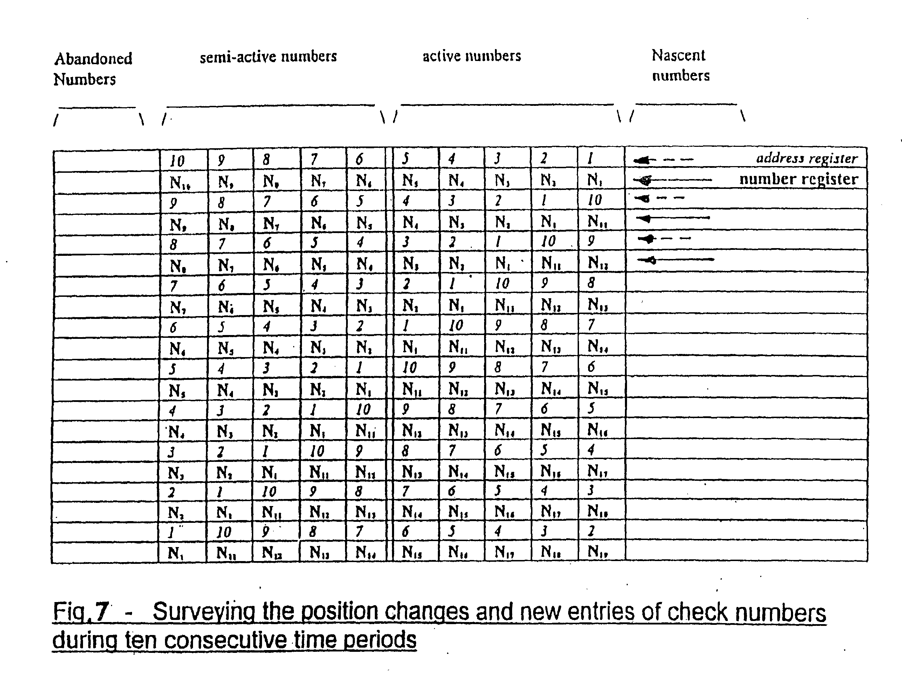

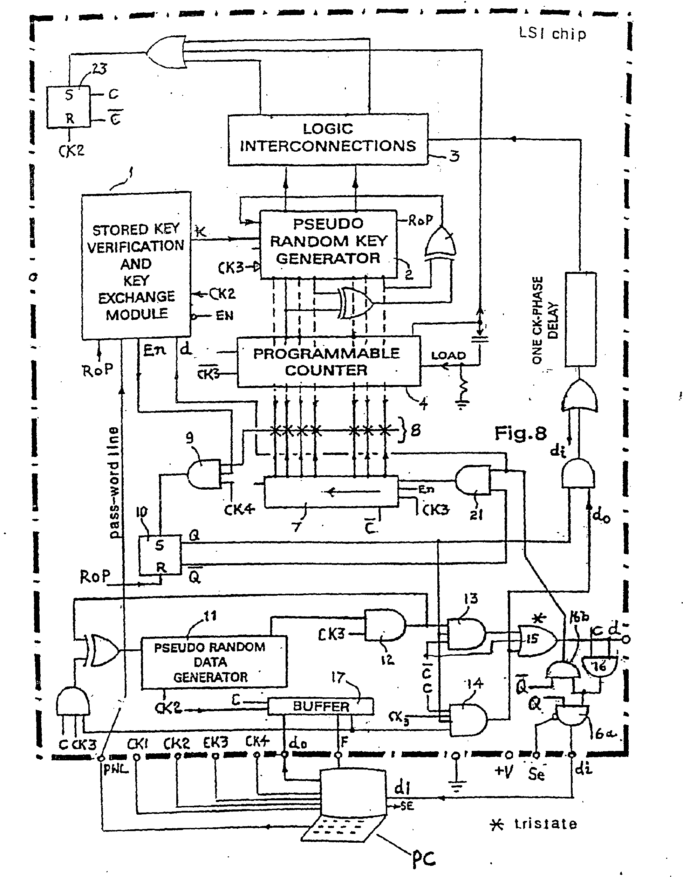

Figures 6 and 7 explain how it is possible to have 8 - 10 simultaneously valid keys and how they are weighted in a number ageing process. Figure 8 shows a functional block diagram of an LSI chip such as would be capable of carrying out data encryption at a high clock rate suitable for any communication network and would provide added security over and above the basic scheme of Figure 5.

### Detailed Discussion of the Drawings

FIG. 1 shows two personal computers or communication work stations using a fixed secret key, or using a program permitting one of the stations to utilize the encryption key of the other.
FIG. 2 illustrates a situation where the official key employed within an organisation is not normally used for the actual encryption/decryption of data. If for example station A represents the word processor in a secretarial pool of one company, and station B the processor office in another company, And the message sender has a small computer in his office Aₚ wishing to send a confidential message to a particular person having a computer Bₚ, then the procedure would be as follows:
   (a) The secretary at A will type into the word processor A a statement from Mr. Aₚ in clear language and put it on disk.
   (b) Next, the secretary agrees with Aₚ to display on the window of Aₚ the text as written for approval or amendments.
   (c) When approved, Aₚ will contact the secretary at A over the phone to prepare internet connection with the communication of office at B.
   (d) When communication is established, the secretary rings Aₚ to report 'ready'.
   (e) The executive at Aₚ now types his private password ppw into his keyboard thereby transmitting it to work station A where the instruction code tells the computer to deduct (or add) the password number, or a multiple thereof, from the encryption key of the organisation.
   (f) Once this is done a green light informs the secretary that the clear text derived from the disk is to be moved through the encryption algorithm and out into the internet.
   (g) The encrypted message is taken on disk at computer unit B. It cannot be read by staff.
   (h) When executive Bₚ returns to his office, he will find a light signal indicating that he has a personal message. Accordingly, he will enter the agreed pass word ppw on his computer keyboard together with the instruction of deducting it from the common general key. After that, the decrypted message will appear on the screen Bₚ.

It would be technically possible to provide the Managing Chief in each conpany with an automatic printout of all personal messages, to enforce the sharing of confidential information.

Since the encryption system here expounded is not primarily determined by mathematical conversions, and therefore all numbers are equally suitable, it would suffice if the executives concerned are told that they must have a six-digit ppw. Knowledge of agreed passwords may therefore be limited to the parties themselve
FIG. 3 shows the structure of a Service Center SC for almost fully automatic connection service to clients wishing to send messages required to remain confidential. Fig.3 shows again a workstation A in one locality and another workstation in a remote locality but using the same equipment. The central server station consists of two sections (A & B). These sections comprise channel switching section sw, switch control sections LS_{A} or LS_{B}; Two algorithmic sections virtually identically with those shown for example in Fig. 8; In each section is also a key register for storing a key Kₙ and a random text data holding register Dᵣ. Below is a computing section COMP, and below that a memory of past transactions, M. The computer unit COMP has a preferably direct link with a National Key Generator Center NKGC. Where a direct link is not available, a switched connection with NKGC will do because no clear data are passed through this link. (see also Fig. 6) The process prior to A sending a confidential message to B, can be reported in ten steps.
   (1) station A dials the local Service Center (SC) and immediately thereafter dials also the number of the desired receipient B.
   (2) Station A gets indication that connection is made
   (3) prompted by (2), section B receives from station A the address code for identifying the key held at present by station A. (see address reg., fig.7).
   (4) section B of SC calls station B.
   (5) Station B responds by sending its address in clear
   (6) using the two address numbers from A and B, the SC looks up from a memory table similar to that of Fig. 7 the at the time valid secret key numbers. Section A of SC extracts the key nr. for station A, inserts it into the algorithm (algo) thereby encrypting K_{A} by K_{A} and sends it to station A for verification. - Section B of SC proceeds likewise with station B. (the table is stored in section COMP, and is periodically updated from the national key generator centre, see Fig. 6).
   (7) A and B receive the encrypted keys K_{A}' and K_{B}' respectively, decrypt them with their respective K_{A} and K_{B} keys, and if any station cannot verify it sends to the respective section of SC a repeat request. If this also fails ... a 'failed' signal in clear goes to both stations.
   (8) With both comparisons correct, the SC proceeds to obtain from its COMP section an alternative key number K_{C} which section A encrypts with K_{A}, and section B encrypts with K_{B}, and sends these numbers to stations A and B respectively where they are decrypted and entered into their key registers, substituting their earlier keys.
   (9) Stations A and B send out K_{C}' to the respective sections of SC where they are compared to test equality.
      at this point both stations would be ready to communicate. The time lapse so far (after the initial dialling by station A) would be less than 4 seconds. To improve security further a further step is adding a few seconds to the setting up procedure:
   (10) The Computer Resource unit COMP supplies to the operative sections a random number called Dᵣ where it is entered into a register connected for generating through re-circulation a fairly large pseudo random number. This number is continually passed through tha algo sections of SC, and the output is sent to stations A and B where they are decrypted and continually passed through a comparator register being only a few bits (5 - 12) long. Parallel outputs from this register are continually compared with a similar number of selected parallel bit outputs from the larger, in the opposite sense rotating, key register. Whenever all the bit positions of the static bit comparator are at the strobing moment equal, a pulse is released both in the stations A and B and in the Server Center SC internally which stops the Dᵣ bit generator and establishes in the switching sections sw a direct connection between A and B.
      It should be noted that the true time distance in terms of real data clock pulses could not be determined by a hacker and therefore no conclusion be drawn as to the number structure of the initial key in the key register of the algorithm. This is because the variable word length encryption applies also to the Dᵣ data stream transmission.
Figure 4 illustrates the nature of an encrypted message consisting as it does of an initial phase of random data true the length of which cannot be externally detected, and a transmission phase consisting of a quasi-random mixture of real data bits and random bits - all in a single undivided string of bits giving no clue where one word begins or ends. There is thus no reference points against which an analyst might be able to study the bit sequences.
Figure 5 has already been adequately dealt with on page 2
FIGURE 6 explains the role of the N K G C (national key generator center). In that Center the Kₙ numbers with their address allocations, and also the Dᵣ numbers are generated and the protocol for the transfer of these numbers to head offices of various kind is observed. The management of the Center would be limited to determining the optimum rate at which updates for new numbers should be made. This would be set responsive to the performance of the system as a whole as reported by supervisors. Performance reports from head offices such as Bk (banks) or TR (transport organisations) or SC's (service centers for confidential communications) would be studied by supervisors and appropriate responses formulated. Management would have no access to actual key numbers. When a station mal-performs, its encryption module is detached and sent to the factory,and replaced by a factory-new one.

It is here suggested that both systemwise and with respect to the encryption module IC, the here explained confidential message system may be used also in bank transaction as also in remotely issued travel passes and routing instructions.
FIGURE 7. This table surveys the position changes of a number which ranges from a nascent phase to an active, semi-active, and finally abandoned phase. The numbers are classified in terms of age. The active number range comprises in this example five ageing positions, and so does the semi-active range of numbers. If each column segment represents the time span of, say, one week, it would take ten weeks for a number to travel from the nascent region through the active and semi-active region, in order to exit into the for normal use in-accessable abandoned region.

Once an address is allocated to a number, the two numbers remain associated during their migration through said regions.

Both active and semi-active numbers are valid numbers, and are therefore accepted by terminals and server stations for commencing a communication. However, either right at the beginning or after completion of the communication event, an older active number is substituted by a younger one, or any semi-active number is substituted by any number from the active region. If an internet station, or an IC card - through non-useage over a longer period of time - has in its encryption algorithm a number which at the time of re-use belongs to an abandoned number, it would be necessary to make contact with certain supervisory organs which have at their disposal access to a central register which keeps a record of numbers abandoned in the past. Such organs would be allowed to make also additional checks before they override the absence of a valid key number and bring the station or card up to date again.
FIGURE 8 This shows an example for the LSI chip circuit block diagram. A chip of this type would be needed in an extension card for insertion in one of the the slots for extension functions, such as are common in personal computers. The following are the main features of the Chip:

The four clock phases needed to operate the circuit may be either on chip generated or supplied by the Computer (as fig. 8 indicates). The chip would also be used in the Service Center SC.There is a STORED KEY VERIFICATION AND KEY EXCHANGE MODULE (1). This group has four input lines (ROP, CK2, E̅ and password ..) and two output lines En & K . In connection with internet operation there may be at least one more input from outside the chip, when namely the output EN has to be delayed because of delays, in getting a connection completed or for whatever other reason. When the electric level at EN changes this indicates that verification and key exchange are satisfactorily completed, and, with everything else being ready the next phase can begin. - The ROP input to module 1 resets all internal bistables and occurs when power is switched on or shortly afterwards. The d-input is con - nected to the incoming signal line to enable the address reference for the encryption key held, to be read out . This last mentioned detail is not shown worked out in figure 8.

In practice, the circuit must satisfy the condition that external communication of keys must take place only in the encrypted form. The input CK2 provides the proper clock phase for the key exchange functions. The output K transfers to block 2 the new key before commencing the encryption and decryption functions. All encrypted incoming line signals are decrypted by gate 16.

The pseudo random key generator rotates the shift register 2 with every CK3 clock pulse. The programmable counter 4 is advanced with every CK3 clock pulse. The bistable 23 is reset with every CK2 clock pulse. The programmable counter , after producing a carry output is loaded with the paralell output from the key generator at the time, that is between CK3 and the following CK2. The incoming or outgoing real data bits also have an effect on the constellation of the logic interconnections, block 3 in that the consecutive data bits are fed with the delay of one complete clock cycle to block 3. From this arrangement it follows that discovery of the clear text is not possible without the prior knowledge of the clear text, making discovery superfluous. Text generated in the P C is connected to a buffer register (17) or perhaps two such registers, via the terminal dₒ The buffer fills until a signal F (full) is fed back to the computer. As the buffer clears due to passing on data to gate 14, the buffer register is filled up again from an overflow register in the computer itself. The job of the pseudo random data generator, block 11, is to provide meaningless data bits to be fed to outlet 'd' via the gates 12 and 13 when c̅ is high. The gate 14 admits data from the buffer 17 only when c is high. As the bistable outputs c and c̅ are dependent on the rest of the algorithm, a quasi random mixture of real and fake data is produced at the d output when in the sending phase. When in the receiving phase, the scrambled mixture of real and random data bits is descrambled by gate 16. The remaining real data in the gate 16 output are channeled in the very beginning before the actual message transmission to gate 21 and to the d input to block 1 during the initial key checking and exchanging phase. The output from 21 feeds into a short shift register 7 which has paralell outputs for each of the bits it holds. These are applied to a static comparator 8 and compared bit by bit with an equal number of outputs from the register of block 2. As both the registers are shifted on the rising edge of CK3 but in opposite directions this has the effect of scanning and testing the registers as to the chance of hitting a seven bit (or 5-bit, etc.) combination where all the input bit comparisons are successful causing an output pulse by the strobing clock CK4 on AND gate 9 to trigger bistable 10. As the gate of 16b is enabled by Q̅, with the disappearance of this high level the flow of encrypted nonsense data stops. A very similar arrangement in the Service Center SC also causes the flow of these data to stop and to connect the station A (Fig. 3) with station B directly via switch elements sw. From now on, encrypted data are meaningful text from A to B. Station B will from that moment on channel data received at d (Fig. 8) through gates 16 and 16a to the output interface dᵢ on the PCB whose adge contactors are plugged into the appropriate sockets inside the P C. When the workstation PC sends, an output SE is generated which disables the gate 16a. The computer can also generate a signal along chip input pwl (password line) to modify the encryption key as explained in connection with the comment on Figure 2.

Finally, the question should be addressed whether the present encryption system permits the communicating parties to engage in a dialogue. The answer is yes, messages may be sent in both directions with or without pause and there is no limit to the length of the message or of the dialogue.

Because of the nature of the encryption method which defies any form of systematic factoring of the encrypted text, it is unlikely that a free-lance hacker can be a threat to the described system in spite of the fact that the interchanges between the Client Computer (CC) and the

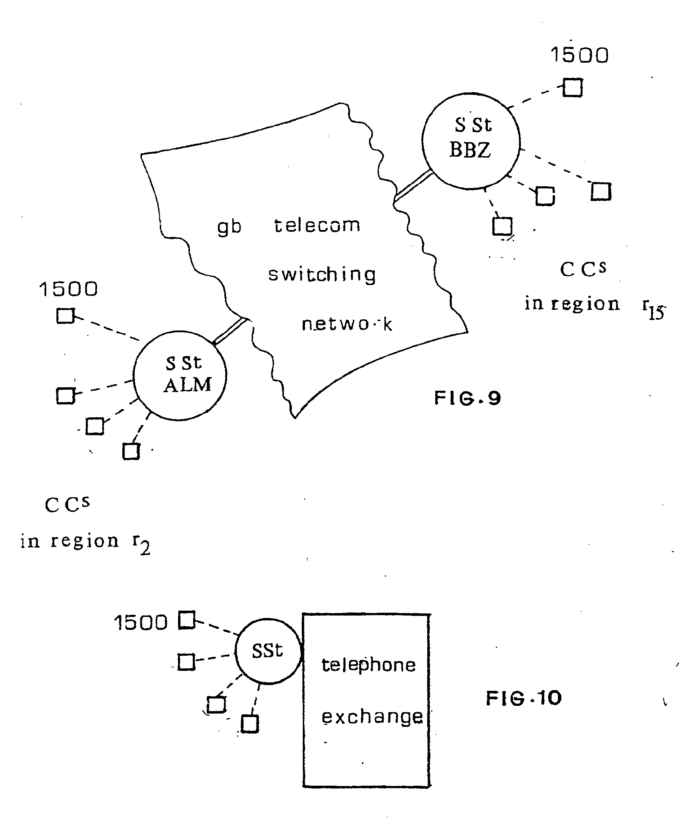

Server Station (SSt) contain one element, the address information, in the clear. In a slightly better position are the expert engineers of the server stations which may have an insight into the precise moment when within the encrypted data flow various addresses are offered. In a very general way one may admit the possibility of a problem that may then arise. Although a close analysis of possible exposures would indicate that the use of address codes in the clear, un-encrypted form provides no important clue to a possible hacker, it may nonetheless be that a hypothetical person in the future might find a way of using the clear key addresses as a starting point for breaking the system. In such a case, the following alternative scheme may be appropriate, i. e. an alternative scheme which would permit also the address code to be sent only in the encrypted form. According to our proposal, the Client computers of a local region would have a special relationship with the Internet Secure Server station of that same region (SSt). The Client Computer (CC, Fig. 9) would when contacting the Server send to it its ID number. This number serves as an address in the Server station's memory bank which would contain the very same data as the Client station, namely
a chip serial number and/or the date of inaugurating of the client chip (from an unalterable ROM);
the last entered encryption key number,
the last entered Preamble Delay number Dᵣ,
and in place of a revolving address code, an annual sequential entry serial number.

Based on this information, the calling station may immediately begin with sending its own data in encrypted form which the receiving server station would place into a comparator register, and if all these data are correct will automatically issue a new key number and preamble random delay number and the next sequential number in encrypted form using the old key, and the corresponding decrypted clear data are then placed into the memory of the Client Computer station. Its operator is requested to dial the distant station to which message material is to be sent. The dial number would pass through the encryption algorithm and therefore does not allow a third party to know which company or person will be connected. The first part of the dial code will call up the distant server station (for example BBZ) and the number part will call up the particular CC, say 1500. When the latter responds, it sends its own ID number to the distant local Server station, and a similar comparison process as described above, is initiated. If this verifies that the correct CC station has been contacted, the new key (Kₙ₂) given to the calling station is now also given to the called station. After this is verified, this is made known to the calling station, and a display invites its operator to proceed sending the intended material (text, drawings, voiced comment, etc).

The just described alternative logistics for a variable word length data transmission system, would blend well into telephone and internet based communication infra structures.

It is feasible that just one further step in this direction could be made by integrating the envisaged function of secure Server Stations with the location of telephone branch Exchanges (as indicated in Figure 10) , This would be economical in installation costs,and could work fully automatically in the environment of an automatic switching system. This does not exclude
the computerized electronic equipment being housed in a separate reinforced building. It would suffice to have that building in close vicinity to the said telephone Exchange station.

## Claims

1. A fully automatic encryption and key renewal system for confidential e-mail communication, comprising at least two e-mail stations linked to a communication system and automatic key renewal system comprising:
a key generation centre (NKGC) for the generation of random Keys for the use of said at least two e-mail stations,
means (SR) for the periodic renewal of the keys used by said at least two e-mail stations, and
means for scrambling or encrypting data to be transmitted, using said keys; and
local server stations (SC) which update and store data transmitted by the said Key Generation Centre,
said local server stations (SC) store said keys in a look-up table, each key being associated with an address code having associated data indicative of the age of said key, and to classify the age relative to the age of other keys in use at any given time;
**characterised in that**
said server station includes means adapted to issue, prior to each confidential e-mail communication between said at least two e-mail stations, a new key to the sending e-mail station, as the key to be used by said stations for scrambling or encrypting the data to be transmitted;
*wherein* said look-up table means is adapted to store a fixed number of encryption keys numbers conjointly with their respective access addresses in a shift register-like memory structure
*and wherein* said system comprises means for moving the said fixed group of key numbers and said addresses periodically from a younger to an older position, the youngest position serving as an entrance point for a new number supplied by the said key generation centre, and the oldest number being relegated to an inactive and reserved position outside the said fixed number or group of encryption keys.

2. A fully automatic encryption and key renewal system as in Claim 1 *wherein,* the said at least two e-mail stations have means for encrypting and decrypting data including the key numbers themselves, comprising means for executing a key number replacement routine which accepts a new key number only on the basis of a successfully completion of the replacement routine, the said routine being implemented prior to the transmission of a new key from said local Server Station (SC) to a sending e-mail station (A).

3. A fully automatic encryption and key renewal system for confidential e-mail as in Claims 1 or 2, comprising
means for recognising the legitimacy of a server station by a calling e-mail station, comprising
(a) means for sending to the server station the said address code to assist the local server station in obtaining the calling station's encryption key
(b) means for using the address to assist the server station in obtaining the calling station's encryption key
(c) the server station comprising equipment to encrypt the key encryption number with itself;
(d) the server station also comprising means to send the encrypted key to the e-mail stations (Ap,Bp)
(e) the calling e-mail station comprising means for decrypting the the received key, using its own key, and placing the result into a comparator register, and means for determining if the compared numbers are equal, and providing an indication to the server station.

4. A fully automatic encryption and key renewal system for confidential e-mail as in Claim 3, *wherein,* in he case that the compared numbers are equal, the server station (SC) is programmed to obtain from its storage means an alternative key number (kc) from the currently stored key numbers, and to encrypt that new number with the key of the calling station, and wherein the latter is programmed upon receipt of the encrypted new key to decrypt said number and to place it into its key register in substitution of the number it had before.

5. A fully automatic encryption and key renewal system in as in Claim 1 or claim 3 wherein the server station (SC) is operable to act as a switchboard fo connecting a calling station (A) to a requested receiving station (B) and wherein the Server Station consists of a computer section (COMP) and a twin structure which is equipped with two sets of algorithm (algo), two sets of switch controls (LSA and LSB) and two sets of buffer memories (Kn) for holding key numbers and other relevant flags as supplied by the computer section (COMP).

6. A fully automatic encryption and key renewal system as claimed in claims 1 - 4 , *wherein* the said Server Station (SC) contains a pseudo-random generator (Drₓ) in order to generate quasi-data inputs which are transmitted to a receiving station in encrypted form in order thereby to shift the starting conditions in the algorithms of the e-mail units for the real text to an undetectable point.

7. A fully automatic encryption and key renewal system, as claimed in Claim 1 - 5, *wherein* the said means for the encrypting of data have the shape of an LSI silicon chip (21c), comprising:
means (SK"G) for receiving from the said local Service Station the key renewal number after having passed through a block DESCRAMBLE,
(a) a clocked shift register (SR) for initially holding the said key renewal number designed as a pseudoo-random data generator,
(b) a Logic Control block (LC), receiving input data from the clocked shift register (SR) having parallel output links (p/o).
(c) Bit delay elements (BIRs and BTRr), containing bi-stables for delaying real data bits over a period of one complete clock cycle, or a multiple thereof, for aookying them to the said Logic Control block,
(d) a pseudo random data generator (RDG) for utilising the encryption control output c, or respectively c̅, derived from said Logic Control block, for the pattern development of the encrypted output which is a variable word length mixture of real data bits and random data bits, said pattern being determined by the history of consecutive changes in the the settings of bo-stables within the LSI silicon chip (21-C).

8. A fully automatic encryption and key renewal system for confidential e-mail as as in Claims 1 to 6, *comprising* algorithm means for the encrypting process adapted to produce word bit configuraions consisting of more than 8 bits and less than 16 bits per word transmitted, and the bit number per word continually changing.

9. Apparatus for a fully automatic encryption and key renewal system as in claims 1 - 7, *wherein* the precise point in time for switching the two communicating stations from the said initial phase of meaningless random, data to the phase of meaningful encrypted data is given by applying the said meaningless data output from station A to a short shift register (7) in both the communicating stations, and the states of the short comparator (8) inputs being continually compared with the parallel data bits of the pseudo random key generator (2) until such moment as both sides of the data inputs happen to be the same, and a signal is released within each of the communicating stations which switches them from the random number phase into the text transmission phase.

10. A fully automatic encryption and key renewal system for confidential e-mail as in claim 6, further ***characterised* by** comprising:
(a) a stored key verification and key exchange module (1),
(b) a pseudo random key generator (2), (SR),
(c) a system of logic circuit elements and inter-connections between them,
(d) a programmable counter (4),
(e) another pseudo-random data generator (11) for supplying surplus data bits,
(f) a one clock pulse delay circuit (BTRr, BTRs), which delays a real data bit, both incoming and outgoing, in affecting the state machine or algorithm status,
(g) a serial buffer (17) for accepting work station data and to pass them on to the algorithm in accordance with instant state of the equipment receiving real text data bits.

11. A fully automatic encryption and key renewal system as claimed in Claim 9, *wherein* the said key exchange module (1) also contains mathematical processing means for adding a password to te operative key number or deducting a password from the operative key number in the key register of said module.

12. A fully automatic encryption and key renewal system as claimed in claims 1 to 10, *wherein* the |Server Station (SC) is adapted for receiving from a calling station a stored encryption key address in clear text and in encrypted form the dial number of a party to be called,
based on said access address, the automatic server station being adapted to identify the encryption key which had been allocated to the calling party for its preceding confidential e-mail communication,
based on said identified key, the automatic server station is operable to decrypt the dial number received and to dial the called party which, when responding, sends to the automatic server station the clear access address of its own last used encryption key,
having received said access number, the Server Station is operable to send the encryption key encrypted by itself whereupon the called equipment decrypts its own key to test whether these signals derive from a genuine Server,
said Server Station (SC) is operable to use the called station's encryption key to encrypt the calling station's new encryption key with the called station's key which, after being decrypted,
in the called station replaces its old key, and is operable to send an indication thereof to said Server Station whereupon the direct connection between the calling and called stations is executed in the switching sectors (A, B).

13. A fully automatic encryption and key renewal system for the confidential transmission of data as in any preceding claim *wherein* this data processing system is not rigidly predetermined but is operable to be continually influenced and modified
(a) by the parallel bit outputs of a revolving encryption key register, and
(b) by some, but not all the clear bits of the data inputted to the said algorithm circuit for encryption or outputted from the said algorithm circuit after decryption.

14. A fully automatic encryption and key renewal system for the confidential transmission of data as **characterised in** Claims 1 - 12, *wherein* the functionality of the said LSI silicon chip (21C) is operable to be further influenced and modified
by the configuration of a password entered by the operator at the sending and receiving stations in order to ensure that the transmitted text, picture, or voice mail is faithfully reproduced only for those persons who are intended to know it.

15. A fully automatic encryption and key renewal system for confidential e-mail as in claim 10, *wherein* the means for carrying out the encryption process includes a memory into which can be written only once, namely when a specific station is inaugurated and *wherein* the client computers (Ap, Bp.) are associated with ID's which have been recorded in the computers concerned together with the above data.

## Patentansprüche

1. Ein vollautomatisches kryptographisches und Schluesselerneuerungs System fuer die vertrauliche e-mail Verbindung von zwei Stationen, wobei das System die folgenden Hauptelemente umfasst:
eine zentrale Schluesselverteilungsinstanz (NKGC) welche Zufallszahlen erzeugt, sodass dieselben zwecks Verschluesselung den besagten zwei e-mail Stationen zur Verfuegung gestellt werden koennen
Hilfsmittel (SR) fuer die periodische Erneuerung der Verschluesselungszahlen; und weitere Hilfsmittel zum Vermischen oder Verschluesseln der eigentlichen Daten mit den besagten Zufallsdaten
Lokalbezogene Dienststellen, welche die besagten Schluessel entgegennehmen und den e-mail Stationen zufuehren, wobei aeltere Schluessel gegen neue, von der genannten zentralen Verteilerstelle gelieferten, Schluessel ausgetauscht werden,
die besagten lokalbezogenen Dienstellen speichern die erhaltenen Schluesseldaten in einer Referenztabelle, worin jeder Addressenkod Merkmale besitzt, aus denen sein relatives Alter gegenueber anderen auch gueltigen Koden ablesbar ist, um die Schluessel als gueltig, halb-gueltig, und ungueltig klassifizieren zu koennen;
**dadurch gekennzeichnet, dass** die besagten Dienstellen Mittel besitzen, vor dem Einsatz einer vertraulichen e-mail Kommunikation zwischen den besagten zwei e-mail Stationen, um zunaechst an die sendende Station eine neue Schluesselnummer zu liefern, mit dem die zwei Stationen (A,B) den Datenstrom verschluesseln oder entschluesseln koennen.
und worin die besagte Referenztabelle so beschaffen ist, dass nur eine vorbestimmte Gruppe von Schluesseln mit ihren Zugriffsaddressen in einer, einem Schiftregister aehnlicher, Struktur aufscheinen,
und worin das besagte System Mittel umfasst, um die besagte vorbestimmte Gruppe von Schluesseln zusammen mit den respektiven Addressen periodisch von einer juengeren zu einer aelteren Position zu bringen, wobei die juengste Position als eine Eingangstelle fuer eine von der genannten zentralen Verteilerstelle ausgehenden und zur lokal-bezogenen Dienststelle (SC) uebertragenen Schluesselnummer dient,
und wobei die aeltest-geltende Nummer aus dem Schiftregister in einen nicht-aktiven Zustand ausserhalb der vorbestimmten Gruppe von geltenden krypto-grafischen Schluesseln bewegt wird.

2. Ein vollautomatisches kryptografisches und Schluessel-Erneuerungs System wie in Anspruch 1, **worin** die besagten zwei- e-mail Stationen Mittel besitzen, um die kryptografische Verschluesselung und Entschluesselung der Daten durchzufuehren, einschliesslich der vertraulichen Uebertragung der Schluessel selber, wobei ein Ersatzverfahren verwendet wird, das die besagte Dienststelle befaehigt, einen **neuen** Schluessel an die genannten Stationen (A,B) in chiffrierter Form automatisch abzugeben.

3. Ein vollautomatisches kryptografisches und Schluesselerneuerungs System wie in Anspruechen 1 und 2, welches Mittell besitzt, um die Legalitaet einer besagten Dienststelle in der sendenden Station zu erkennen, welche Mittel im Wesentlichen die folgenden sind:
(a) Alle Schluessel sind mit einer Addressenangabe assoziiert, die in Klarschrift an die besagte Dienstelle abgegeben wird,
(b) weitere Hilfsmittel mit denen die besagte Dienststelle aus der Addressenangabe die Schluesselnummer herauslesen kann,
(c) Die lokal-bezogene Netzwerkdienstelle umfasst Anordnungen, welche es ermoeglichen eine Schluesselnummer mit sich selber zu verschluesseln,
(d) Die lokal-bezogene Netzwerkdienstelle umfasst ferner die Mittel den genannten Schluessel kryptografisch an die e-mail Stationen (Ap,;Bp) zu senden.
(e) Die anrufenden e-mail Station hat bereits die Mittel, durch Nutzung des eigenen Schluessels, den empfangenen Schluessel zu entschluesseln und einem Vergleichsregiser zuzufuehren, und weitere Mittel, um festzustellen, ob die verglichenen Nummern gleich sind, um der Dienstelle davon eine Andeutung zu geben.

4. Ein vollautomatisches kryptograßsches und Schluesselerneuerungssystem, wie in Anspruch 1 bis 3, **worin** im Falle der Gleichheit der Schluesselnunnnern, die Netzwerk-Dienststelle (SC) programmiert ist, eine neue Verschluesselungsnummer (Kc) aus dem Bereich gespeicherter Nummern auszuwaehlen und mit dem Schluessel der anrufenden Station zu versehluesseln, und **worin** die anrufende Station programmiert ist, die chiffriefte Nummer zu entschluesseln und in ein Anfangsregister einzusetzen und damit **den** Schluessel zu ersetzen, welchen die anrufende Station erhielt, um ihre vorhergehende Transaktion durchzufuehren.

5. Ein vollautomatisches kryptografisches und Schluesselerneuerungssystem, wie in Anspruch 1 und 3, in **welchem** die lokale Dienstelle (SC) dafuer geeignet ist, als Umschalt-und Verbindungsstelle zu dienen, sodass die anrufende Station (A) mit der zu rufenden Station (B) verbunden werden kann, und in **welchem** (System) die lokale Dienstelle aus einer Computerabteiling besteht (COMP) und eine Verdopplung aller noetigen Hilfsmittel, hat, wie z.B. zwei Saetze von Algorithmen (algo), zwei Saetze von Umschaltean (LSA und LSB) und zwei Saetze von Bufferregistem (Kn) zur zeitweisen Festhaltung von Schluesseln und 'Flags' die von der Komputerabteilung (COMP) ausgehen.

6. Ein vollautomatisches, kryptografisches und Schluesselerneuerungssystean nach Anspruch 5, in **welchem** die besagte Dienststelle (SC) einen Pseudo-Zufallsgenerator (DR) besitzt, um teuschende Datenangaben zu erzeugen, die eine, diese Daten empfangende Station in chiffrierter Form erreichen, und um **dadurch** den Beginn der nachfolgenden echten Datenuebertragung zu verschleiern.

7. Ein vollautomatisches kryptografisches und schluesselerneuerndes System, nach Anspruechen 1 bis 6, in welchem die besagten Mittel fuer die Chiffrierung von Daten die Form eines LSI Silikon Chips (21c) annehmen, das die folgenden Merkmale hat:
(a) Mittel (SK"G) um von der lokalen Dienststelle die Schluessel emeuerungnummer zu empfangen,nachem diese durch das logische Gitter "DESCRAMBLE", Fig. 5, gegangen ist;
(b) ein Serienregiser (SR), das als ein pseudo=zufalls Daten Generator ausgebildet ist,
(c) ein logischer Kontrollblock (LC), der als ein Algorithm arbeitet und die serialen Daten von dem besagten Serialspeicher empfaengt;
(d) Bitverzoegerungselemente (BTRs und BTRr), die z..B. bistabile Elementgruppen sind, welche die Daten Bits mit einer gewissen Verzoegerung weitergeben, um so eine Taktverzoegerung von einem vollen Taktpuls zu erzielen.
(d) Ein Pseudo-Zufallsdaten Generator (RDG), dessen Datenproduktion nach Massgabe der logischen Werte von c, oderc respektive c aussetzt, durch welche jedes Datenwort in reale und irreale Datenbits aufgespaltet wird und damit das chiffrierte
(e) Datenmuster erzeugt, wobei das besagte Muster durch eine bestimmte Folge von aktivierten logischen Elementen ausgedrueckt wird und damit die Ablaufsgeschichte der bi-stabilen Umschaltvorgaenge innerhalb des Silikon chips darestellt, die zum Teil von dem eingegebenen Klartext abhaengt.

8. Ein vollautomatisches kryptografisches und schluesselerneuerndes System fuer vertrauliche Mitteilungen wie in Anspruch 7 , welches algorithmische Mittel verwendet zum Chiffrieren der Daten, wobei mehr als 8 bits und weniger als 16 Bits per Wort zugelassen werden, und wobei die Wortlaenge in bits sich forwaehrend aendert,

9. Ein vollautomatisches uind schluesselerneuerndes System, wie in Anspruechen 1 bis 8, **worin** der genaue Zeitpunkt fuer die in Verbinding stehenden Stationen von einem kurzen Vergleichsregister bestimmt wird,das mit einem Passwort oder einem Teil des Passwortes aufgefuellt wird, wahrend in dem anderen Teil des Vergleichsregisters fortlaufend die Paralleldaten von den rotierenden Registern geladen werden, und wenn Gleichheit besteht, eine Umschaltung von DR-Daten zu chiffrierten Realdaten stattfindet, welche gleichzeitig fuer beide Stationen intern stattfindet, aber von aussen nicht entdeckt werden kann.

10. Ein vollautomatisches kryptografisches und Schluesselerneuerndes System fuer die Uebermittlung von vetraulicher Information, wie in Anspruechen 1 bis 7, weiterhin umfassend (a) einen gespeicherten Schluessel
(b) einen pseudop-Zufallsdaten Generator 2 (SR)
(c) ein System von logischen Stromkreisen und verbindenden Leitungen
(d) einen progammbaren Zaehler (4)
(e) einen weiteren pseudo Zufallsdaten generator (11) zur Erzeugung von ueberfluessigen Daten
(f) einen Taktpuls Verzoegerungsmodul fuer Klartext sowohl fuer empfangene als fuer eigene Daten,
(g) einen Serienbuffer (17), der die zu verarbeitenden Daten aufnimmt und an den Algorithm Block weitergibt, oder von dem Algorithm empfaengt mit Ruecksicht auf den Zustand (c.c) des Geraetes die Klarbits aneinander reiht.

11. Ein vollautomatisches kryptogafisches und schluesselerneuerndes System fuer vertrauliche Mitteilungen, wie in Anspruch 8, **worin** der besagte Schluessel Umwechsel Modul (1) auch mathematisch verarbeitende Wirkungen ausueben kann, indem er zumindest ein Passwort zu der Schluesselnummer addieren oder subtrahieren kann, so dass der in Realitaet wirksame Schluessel verschieden von dem offiziell geltenden Schluessel ist.

12. Ein vollautomatisches kryptografisches und schluesselerneuerndes System nach Ansspruechen 1 bis 11, **worin** die besagte Dienststelle dafuer geeignet gemacht wird, von der anrufenden Station eine gespeicherte Chifrieraddresse in Klarshcrift zu erhalten, und in chiffrierter Form die Dialnummer der zu rufenden Station,
gestuetzt auf die genannte Klartextaddresse, kann die automatische Dienststelle adaptiert werden, die Anrufnummer der zu rufenden Station zu kennen und den Anruf automatisch vorzunehmen, und wenn die zu rufende Station antwortet, erhaelt die besagte Dienststelle, die Klarschriftaddresse des in der zu rufenden Station geltenden Chiffriesschluessels,
basiert auf den letztgenannten Schluessel kann die Dientstelleersehen ob die gerufene Station diesem System zugehoert andernfalls bricht sie die Verbindung, und im gegebenen Falle erhaelt die Dienstelle den letztgebrauchten Schluessel der gerufenen Station,
die genannte automatische Dienststelle benutzt die Kenntnis des Geheimschluessels der zu rufenden Station, um den neuen Schluessel (Kc) der zu rufenden Station zuzufuehren und in dessen Speicherregister einzuschreiben
nach De-chiffrierung des neuen Schluessels durch die gerufene Station verdraengt der neue Schluessel den vorher gueltigen Schluessel und sendet eine Andeutung davon zur automatischen Dienststelle, worauf beide Stationen, die anrufende und die gerufene, den gleichen neuen kryptografischen Schluessel verwenden koennen, und somit ist die Rolle der automatischen Dienststelle erfuellt und im Schaltungssektor (A + B) werden daher die Stationen direkt miteinander verbunden.

13. Ein vollautomatisches kryptografische und schluesselerneuerndes System fuer die Uebermittlung von vertraulicher Daten, wie in einem der vorangehenden Anprueche, **worin** der datenverarbeitende Algorithm nicht ein starr Gegebenes ist, sondern modulierbar ist,
(a)durch die sich stetig aendernden parallelen Ausgangsbits des rotierenden Registers
(b) durch die in Klarschrift an den Algorithm eingegebenen Daten

14. Ein vollautomatisches kryptografisches und schluesselerneuerndes System fuer die Uebermittlung von vertraulich zu haltenden Nachrichten wie karakterisiert in den Anspruechen 10 und 11, **wobei** die Funktionalitaet des besagten elektroniscen Chip ist darueber hinaus beeinflusst und modifiziert ist:
[c] durch die Konfiguration eines Passwortes, das Hilfspersonen in den sendenden und empfangenden Stationen eintasten, um sicherzustellen, dass ein Text, Bild, oder eine voice mail Meldung **nur** den Personen zugaenglich ist, fuer welche diese Meldungen bestimmt waren.

15. Ein vollautomatisches kryptografisches und schluesselerneuerndes System wie in Anspruechen 1 bis 14, **worin** die Hilfsmittel fuer die Durchfuehrung der kryptografischen Prozesse einen Datenspeicher umfassen, in den nur einmal etwas geschrieben werden kann, naemlich wenn eine bestimmte Station begonnen wird, wobei das Datum und die Stunde des Beginn's zu registrieren sind, auch eine bestimmte Seriennummer, ein bestimmter Name und eine bestimmte Dienstelle, die der neuen Station zugeordnet ist und worin ein Komputer der zur Anwendung kommt, ein bestimmtes ID hat welches susammen mit den obigen Daten registriert ist.

## Revendications

1. Un système automatique de cryptage et renouvellement des clés pour la communication confidentielle par e-mail, comprenant au moins deux stations de courrier électronique reliées à un système de communications ; le système de cryptage et de renouvellement automatique des clés comprend :
un centre de génération des clés (NKGC) pour la génération des clés aléatoires pour l'utilisation desdites au moins deux stations de courrier électronique;
moyens (SR) pour le renouvellement périodique des clés utilisées par lesdites au moins deux stations de courrier électronique; et
moyens pour la décomposition ou le cryptage des données à transmettre, en utilisant lesdites clés ; et
stations locales de serveur qui mettent à jour et mémorisent les données transmises par le Centre de Génération des Clés,
les dites stations de serveur stockent lesdites clés dans une table de correspondances, chaque clé étant associée à un code d'adresse et chaque code d'adresse contient des données associées concernant la durée d'existence de la clé, et pour classifier la durée concernant la durée d'autres clés utilisées en tout moment ;
**caractérisé par le fait que**
ladite station de serveur comprend des moyens appropriés pour. l'émission, avant toute communication confidentielle par courrier électronique entre lesdites au moins deux stations de courrier électronique, d'une nouvelle clé pour la station de courrier électronique expéditeur, représentant la clé qui sera utilisée par lesdites stations pour la décomposition ou le cryptage des données à transmettre;
où lesdits moyens pour tables de correspondance sont adaptés pour le stockage d'un nombre fixe de numéros de cryptage des clés avec leur adresses d'accès dans une structure de mémoire alternative telle une mémoire registre où
ledit système comprend des moyens pour le déplacement périodique dudit groupe de numéros de clés et desdites adresses d'une position plus récente à une position plus ancienne, la position ancienne servant de point d'entrée pour un nouvel numéro fourni par ledit Centre de Génération des Clés, et le numéro plus ancien étant renvoyé vers une position inactive et réservée en dehors dudit nombre fixe ou groupe fixe de clés de cryptage.

2. Un système complet de cryptage et renouvellement des clés comme décrit dans la Revendication no. 1,
où lesdites au moins deux stations de courrier électronique disposent de moyens pour le cryptage et le décryptage des données, qui comprennent elles-mêmes les numéros de clé, comprenant des moyens pour l'exécution d'une procédure de remplacement des numéros de clé qui accepte un nouveau numéro de clé uniquement sur la base de l'achèvement avec succès de la procédure de remplacement, ladite procédure étant implémentée avant la transmission d'une nouvelle clé de ladite Station de Serveur locale (SC) à une station de courrier électronique expéditeur (A,B).

3. Un système complet automatique de cryptage et renouvellement des clés pour les courriers électroniques confidentiels, tout comme dans les Revendications 1 et 2, qui comprend des moyens pour reconnaitre la légitimité d'une station de serveur à travers une station de serveur d'appel, comprenant
(a) moyens pour la transmission dudit code d'adresse vers la station de serveur dans le but d'aider la station locale de serveur à obtenir la clé de cryptage de la station appelante
(b) moyens pour l'utilisation de l'adresse en vue d'aider la station de serveur à obtenir la clé de cryptage de la station appelante
(c) la station de serveur comprenant des équipements de cryptage du numéro de cryptage des clés avec lui-même
(d) la station de serveur qui comprend aussi des moyens de transmission de la clé cryptée vers les station de courrier électronique (Ap; Bp),
(e) la station de courrier électronique d'appel qui comprend des moyens de décryptage de la clé reçue, en utilisant sa propre clé et en plaçant le résultat dans un registre comparatif, ainsi que des moyens destinées à déterminer si les numéros comparés sont égaux, en offrant une indication pour la station de serveur.

4. Un système complet automatique de cryptage et renouvellement des clés pour des courriers électroniques confidentiels, comme décrit dans la Revendication no. 3, où, si les numéros comparés sont égaux, la station de serveur est programmée de manière telle à obtenir, des propres moyens de stockage, un numéro alternatif de clé (Kc) des numéros de clé stockés à présent et pour crypter ledit nouveau numéro avec la clé de la station d'appel et où ce dernière est programmée, lors de la réception de la nouvelle clé cryptée, à décrypter ledit numéro et le placer dans son registre de clés en place du numéro détenu antérieurement.

5. Un systeme complet automatique de cryptage et renouvellement des cles, comme la revendication no 1 et 3,
ou la station de serveur (SC) peut être operee pour qu#elle agisse comme um tableau de distribution pour la connexion d'une station d'appel (A) a la station destinaire demandee (B) et ou la Station de Serveur comprend un section pour les ordinateurs (COMP) et une structure gemellaire equipee des deux series d'algorithmes (algo), deux ensembles d' interrupteurs (LSA et LSB) et deux series ensembles de mémoires buffer (Kn) pour le stockage des numerous de cle, des codes d'adresse et des aitre indicateurs significatifs fournis par la section pour ordinateurs (COMP).

6. Un système automatique complet de cryptage et renouvellement des clés, comme décrit dans la Revendication no. 5, où ladite Station de Serveur (SC) contient un générateur pseudo-aléatoire (Dr) pour générer des entrées quasi-data qui sont transmises à une station de réception sous forme cryptée pour que celles-ci modifient les conditions de départ des algorithmes des unités d'e-mail pour le texte réel à une valeur indéchiffrable.

7. Un système automatique complet de cryptage et renouvellement des clés, comme dans la Revendication no. 1-6, où lesdits moyens de cryptage des données ont la forme d'un chip de silicone LSI (21c), comprenant :
a) moyens (SK"G) pour la réception, de ladite Station Locale de Services, du numéro de renouvellement de la clé après le passage à travers le bloc "DECOMPOSITION" (Fig. no. 5)
b) un registre de changement chronométré (SR) pour le stockage initial dudit numéro de renouvellement des clés conçu comme un générateur pseudo-aléatoire de données,
c) un bloc de « Contrôle Logique » (LC) qui reçoit des données introduites du registre de changement chronométré (SR) ayant des connections de sortie parallèles (p/o).
d) éléments retardeurs des bits (BTRs et BTRr), comprenant des éléments bistables pour le retard des bits de données réelles pendant la période d'un cycle complet d'horloge ou d'un multiple de celui-ci, pour l'application audit bloc de Contrôle Logique.
e) Un Pseudo-générateur de Données Aléatoires (RDG) pour l'utilisation du résultat de contrôle du cryptage c, ou respectivement c, dérivé dudit circuit de CONTROLE LOGIQUE, pour le développement standard des résultats cryptés qui représentent un mélange de la longueur de la parole qui consiste en bits de données réelles et bits aléatoires,
ledit modèle, étant déterminé par l'histoire des modifications dans les configurations consécutives des éléments bistables à l'intérieur du chip de silicone LSI (21-C).

8. Un système complet automatique de cryptage et renouvellement des clés pour courriers électroniques confidentiels, comme décrit dans la Revendication no. 7, comprenant des moyens algorithmiques pour le processus de cryptage, adaptées pour produire des configurations de bits de mot avec au moins 8 et 16 bits tout au plus par chaque mot transmis, le nombre de bits par mot se changeant de façon continue.

9. Appareil pour système complet automatique de cryptage et renouvellement des clés comme décrit dans les Revendications de 1 à 8, où le moment précis dans le temps pour la commutation des deux stations de communications de ladite phase initiale des données aléatoires insensées à la phase des données cryptées sensées, est donné par l'application de ces sorties de données insensées de la station A vers un registre de changement bref (7) aux deux stations de communications, et les configurations du comparateur bref (8) sont continuellement comparées aux bits de données parallèles du pseudo-générateur de clés aléatoires no. 2, jusqu'au moment respectif, au fur et à mesure que toutes les deux côtés des entrées de données coïncident et est émis un signal au sein des stations communicantes qui les commutent de la phase de numéros aléatoires à la suivante phase de transmission, à un moment imprévisible du temps.

10. Un système complet automatique de cryptage et renouvellement des clés, comme décrit dans la Revendication no. 7, **caractérisé en outre par le fait qu'**il comprend :
(a) un module de vérification des clés stockées et de changement des clés (1),
(b) un pseudo-générateur de clés aléatoires (2), (SR)
(c) un système d'éléments de circuit logique et d'interconnexions entre ceux-ci
(d) un compteur programmable (4)
(e) un autre pseudo-générateur de clés aléatoires (11) pour la fourniture de bits de données en surplus
(f) un circuit retardeur de l'impulse à horloge (BTRr, BTRs), qui retard un bit de données réelles, aussi bien en entrée qu'en sortie, par l'affectation de l'état de la machine ou du statut de l'algorithme,
(g) un buffer spécial (17) pour l'acceptation des données des postes de travail et pour les transférer à l'algorithme ou de l'algorithme conformément à l'état d'instance de l'équipement qui reçoit des bits de données.

11. Un système complet automatique de cryptage et renouvellement des clés pour courriers électroniques confidentiels, comme décrit dans la Revendication no. 8, où ledit module d'échange de clé (1) contient aussi des moyens de traitement informatique pour l'ajout ou l'élimination d'un mot de passe du numéro opératif de clé du/dans le registre de clés dudit module.

12. Un système complet automatique de cryptage et renouvellement des clés, comme décrit dans les Revendications de 1 à 11, où
la Station de Serveur est adaptée pour recevoir, d'un poste d'appel, une adresse d'accès pour des clés cryptées stockées, en texte clair et, sous forme cryptée, du numéro d'appel de la partie à appeler,
sur la base de ladite adresse, la station de serveur automatique étant adaptée pour identifier la clé de cryptage qui avait été allouée à la station d'appel pour la communication e-mail confidentielle précédente,
sur la base de ladite clé identifiée, la station de serveur automatique est opérable pour décrypter le numéro d'appel reçu et pour composer le numéro d'appel qui, lors de la réponse, transmet à la station serveur automatique l'adresse d'accès de la dernière clé de cryptage utilisée,
après la réception dudit numéro d'accès, la Station de Serveur automatique envoie la clé de cryptage cryptée elle-même, après quoi l'équipement appelé décrypte sa propre clé afin de vérifier si ces signaux proviennent d'un serveur véritable,
ladite Station de Serveur utilise la clé de cryptage de la station appelée afin de crypter la nouvelle clé de la station d'appel avec la clé des stations appelées, qui
après être décryptée dans la station appelé en remplace l'ancienne clé et transmet une indication à ladite Station de Serveur, après quoi la connexion directe entre la station d'appel et la station appelée est effectuée en secteurs de commutation (A + B) (Fig. No. 3).

13. Un système complet automatique de cryptage et renouvellement des clés pour des courriers électroniques confidentiels, comme revendiqué dans toute Revendication précédente, où ce système de traitement des données n'est pas prédéterminé de façon rigide, mais continuellement influencé et modifié
(a) par les sorties de bits parallèles d'un registre de clés de cryptage rotatif
(b) par quelques-uns (mais pas tous) des bits libres des données introduites dans ledit circuit algorithmique en vue du cryptage ou éliminées dudit algorithme après le décryptage.

14. Un système complet automatique de cryptage et renouvellement des clés pour des courriers électroniques confidentiels, comme décrit dans les Revendications no. 11 et 12, où la fonctionnalité dudit chip micro-électronique est opérable pour être ultérieurement influencée et modifiée.
(c) par la configuration d'une clé introduite par un opérateur aux stations de réception et de transmission, afin de garantir que le texte; l'image ou le message vocal transmis est reproduit fidèlement seulement pour son destinataire.

15. Un système complet automatique de cryptage et renouvellement des clés pour des courriers électroniques confidentiels, comme décrit dans la Revendication no. 11, où les moyens pour la réalisation du processus de cryptage incluent une mémoire dans laquelle on peut inscrire seulement une fois, précisément quand une station de courrier électronique spécifique est inaugurée et associée à une date d'inauguration définie, un numéro de série défini et une Station de Serveur (SC) définie et où lesdits ordinateurs client (Ap, Bp, etc) sont associés à des ID qui ont été enregistrés, chacun d'entre eux, sur ledit ordinateur avec les données ci-dessus.
